Europäisches Patentamt

European Patent Office

Office européen des brevets

(19)

(11) Numéro de publication: **0 015 350**
**B1**

(12) **FASCICULE DE BREVET EUROPEEN**

(45) Date de publication du fascicule de brevet: **01.07.81**

(21) Numéro de dépôt: **79400162.8**

(22) Date de dépôt: **13.03.79**

(51) Int. Cl.³: **F 27 B 7/38, F 16 L 55/00,
B 07 B 1/12**

(54) Dispositif de protection d'un conduit débouchant dans une enceinte.

(43) Date de publication de la demande:
**17.09.80 Bulletin 80/19**

(45) Mention de la délivrance du brevet:
**01.07.81 Bulletin 81/26**

(84) Etats Contractants Désignés:
**BE DE GB IT**

(56) Documents cités:
**FR - A - 1 131 012**
**FR - A - 2 212 914**
**FR - A - 2 159 553**
**FR - A - 2 404 820**

(73) Titulaire: **CREUSOT-LOIRE ENTREPRISES
Tour GAN Quartier Alsace
F-92400 Courbevoie-La-Defense (FR)**

(72) Inventeur: **Dementhon, Daniel
1 rue Grande Vadot
F-71100 Chalon sur Saone (FR)**
Inventeur: **Bonin, Jacques
16 Sentier des Blettrys
F-71530 Champforgueil (FR)**

(74) Mandataire: **Le Brusque, Maurice et al,
CREUSOT-LOIRE 15 rue Pasquier
F-75383 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Dispositif de protection d'un conduit débouchant dans une enceinte

L'invention a pour objet un dispositif de protection d'un conduit débouchant dans une enceinte et s'applique plus spécialement à la protection des buses de liaison entre un four de cimenterie rotatif et des ballonnets de refroidissement du clinker. En effet, dans les fours rotatifs de cimenterie, on utilise souvent pour refroidir le clinker des enceintes cylindriques appelées ballonnets disposées en satellites autour du four, près de la sortie de celui-ci, et reliées à l'intérieur du four par des buses qui débouchent dans celui-ci de telle sorte que la matière circulant dans le four tombe dans les ballonnets et se refroidit à l'intérieur de ceux-ci avant de sortir de l'installation. Normalement, à la fin de la cuisson, le clinker se présente à l'état pulvérulent, ce qui permet son entrée dans le ballonnet. Cependant, la matière comprend également une certaine quantité de blocs constitués par exemple de morceaux de clinker de dimensions plus importantes, ou formés par collage. Il importe de ne pas laisser entrer de tels blocs dans les ballonnets car en tombant dans la buse d'entrée, ils risqueraient de détériorer le réfractaire au point du chute et également les équipements de relevage qui se trouvent à l'intérieur des ballonnets pour disperser le clinker de façon à améliorer son refroidissement.

C'est pourquoi, pour éviter l'entrée dans les buses de blocs de dimensions trop importantes, il est prévu généralement de mettre en place, dans l'ouverture de la buse, un barreau en acier réfractaire divisant l'ouverture en deux parties, et réduisant donc de moitié le diamètre des morceaux admissibles, voire p.e. FR—A—2404820 (CREUSOT-LOIRE-ENTREPRISES). D'ailleurs, dans de tres grosses buses, on peut envisager la mise en place de deux barreaux parallèles.

Les extrémités du barreau, placées en travers de l'ouverture du conduit, sont fixées par tout moyen sur les deux faces opposées, et, généralement, elles sont engagées, à cet effet, dans deux logements ménagés sur la paroi.

Il s'est avéré à l'usage, que le barreau devait se trouver le plus près possible de la paroi interne du briquetage du four de façon à éviter que des blocs ayant pris position dans l'ouverture de la buse ne soient relevés à une hauteur relativement importante par la rotation du four, ces blocs pouvant provoquer, en retombant, des détériorations du revêtement réfractaire, notamment autour de l'ouverture des buses.

La buse étant constituée généralement d'une chemise métallique recouverte d'un revêtement réfractaire et le barreau étant fixé sur la chemise, pour éviter le phénomène de relevage des blocs, une solution consiste à rapprocher le plus près possible le barreau de la paroi interne du four en faisant affleurer la buse à l'intérieur du four. Dans ce cas cependant, la chemise est soumise à des températures trop élevées.

Si l'on veut laisser la chemise de la buse en retrait de la paroi interne du four, une autre solution consiste à remplacer les barreaux qui, à l'origine étaient rectilignes, par des barreaux coudés dont la convexité est tournée vers l'intérieur du four. Dans ce cas, jusqu'à présent, pour permettre la mise en place du barreau, celui-ci était constitué de deux parties soudées au montage. Cette solution présente l'inconvénient majeur de nécessiter l'emploi d'acier réfractaire soudable, ce qui n'est pas compatible avec la bonne résistance à l'usure que doit présenter le barreau.

L'invention a pour objet une nouvelle disposition permettant de remédier à ces inconvénients.

Conformément à l'invention, les logements dans lesquels s'engagent les extrémités du barreau et le barreau lui-même sont courbés en forme d'arc de cercle à convexité tournée vers le four et ont même centre et même rayon de courbure moyen et l'un au moins des logements est ouvert sur les deux côtés de la paroi du conduit pour la mise en place du barreau depuis l'extérieur du conduit par coulissement dans ledit logement jusqu'à l'engagement de son extrémité dans l'autre logement, le conduit étant muni d'un moyen de blocage du barreau après mise en place, par fermeture des logements sur le côté externe de la paroi.

Dans un mode de réalisation préférentiel, le conduit étant constitué d'une chemise métallique recouverte d'un revêtement interne réfractaire, les logements sont limités par des parois métalliques solidaires de la chemise et prolongeant celle-ci dans l'épaisseur du revêtement.

L'invention va maintenant être décrite, en se référant à un mode de réalisation particulier, représenté sur les dessins annexés.

La figure 1 représente schematiquement un mode de réalisation connu d'un barreau de protection placé dans l'ouverture d'un conduit.

La figure 2 représente en coupe axiale un conduit muni d'un barreau selon l'invention.

La figure 3 représente partiellement une buse pendant l'introduction du barreau.

Sur les figures, on a représenté l'enceinte cylindrique 1 du four, recouverte d'un revêtement réfractaire 10 sur la paroi interne duquel sont ménagés une pluralité d'orifices 2 constituant les ouvertures de conduits limités extérieurement chacun par une tubulure 3 fixée sur la paroi 1 du four à l'intérieur de laquelle est engagée une buse 4. Généralement, la buse 4 est constituée d'une chemise extérieure métallique 40 recouverte d'un revêtement réfractaire 41.

L'entrée de la buse est séparée en deux parties par un barreau 5 dont les extrémités sont fixées sur la paroi de la buse et peuvent par exemple s'engager dans des orifices 42 ménagés sur deux faces opposées de la paroi 41 de la buse.

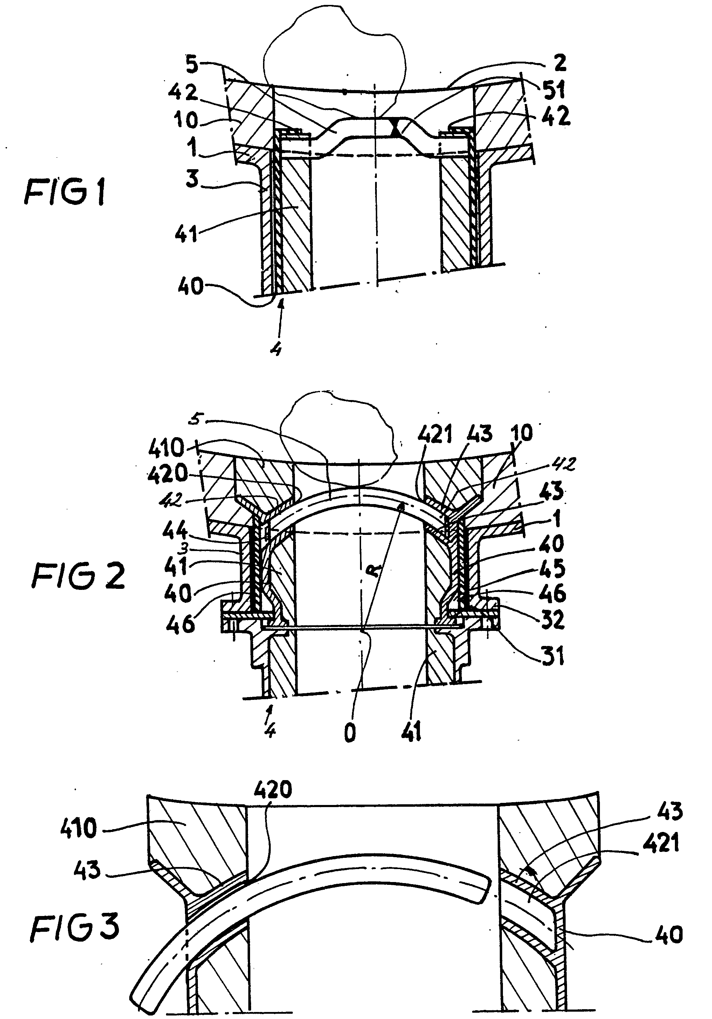

Comme on l'a indiqué, sur la figure 1 représentant une disposition classique, le barreau peut avoir une forme coudée vers l'intérieur de l'enceinte 1 mais, pour permettre l'engagement de ses extrémités dans les orifices 42, il doit être constitué de deux parties reliées entre elles par une soudure 51.

Le dispositif selon l'invention représenté sur la figure 2, est disposé également à l'entrée d'une buse constituée d'une chemise métallique 40 recouverte d'un revêtement réfractaire 41 et enfilée à l'intérieur d'une tubulure 3 solidaire de la paroi 1 du four. Dans l'exemple représenté, la buse a une forme particulière décrite dans la FR—A—2404820.

Selon l'invention, le barreau 5 a une forme courbée en arc de cercle et les logements 42 sont également courbés et ont même centre et même rayon de courbure moyen R que le barreau. L'un au moins des logements, par exemple 420, est ouvert sur les deux côtés de la paroi 41 de la buse, l'autre logement, 421, pouvant en revanche être fermé sur le côté extérieur de la buse, par exemple par la chemise 40. De préférence, les logements 420 et 421 sont délimités par des parois tubulaires métalliques 43 solidaires de la chemise, l'ensemble de ces pièces métalliques pouvant par exemple être obtenu par moulage.

Le barreau et les logements ont une même section qui peut être par exemple circulaire ou polygonale, la section des logements étant cependant légèrement plus grande de façon à laisser un jeu facilitant l'engagement du barreau.

On voit sur la figure 3 que la disposition qui vient d'être décrite permet d'introduire le barreau à partir de l'extérieur de la buse par le logement 420 ouvert sur ses deux côtés, lorsque la buse est en dehors de l'enceinte. Lorsque le barreau est mis en place, ses extrémités sont bloquées d'un côté par la chemise 40 fermant le logement 421 et de l'autre côté par une barrette 44 soudée sur la chemise 40 et placée en travers de l'ouverture par laquelle on a introduit le barreau.

Dans le mode de réalisation représenté, qui est conforme à la FR—A—2404820, la buse est évasée du côté de l'intérieur de l'enceinte et cette disposition permet la mise en place d'une partie de revêtement réfractaire 410 qui protège les parois 43 de la chaleur régnant à l'intérieur du four. En outre, un isolant 46 est placé entre la chemise 40 et la paroi de la tubulure 3.

Dans ce cas, la buse doit évidemment être mise en place par l'intérieur du four et elle peut par exemple être bloquée, après son introduction dans la tubulure 3, par des cales 31 montées sur des brides 32 ménagées à l'extrémite de la tubulure 3 et servant à la fixation de la suite du conduit de liaison avec le ballonnet. Les cales 31 peuvent en effet s'engager dans des logements 45 ménagés à l'extrémité de la chemise.

Grâce aux dispositions selon l'invention, le barreau peut être mis en place et fixé sur la buse sans soudure ce qui permet de l'exécuter dans n'importe quel acier et notamment un acier dur non soudable.

Bien entendu, l'invention ne se limite pas aux détails du mode de réalisation qui vient d'être décrit, et qui pourrait être modifié notamment par l'emploi de moyens équivalents.

**Revendications**

1. Dispositif de protection d'un conduit débouchant dans une enceinte (1), constitué d'un barreau (5) placé en travers de l'ouverture du conduit et dont les extrémités s'engagent dans deux logements (42) ménagés sur deux faces opposées de la paroi du conduit, caractérisé par le fait que les logements (42) et le barreau (5) sont courbés en forme d'arc de cercle à convexité tournée vers l'enceinte et ont même centre et même rayon de courbure moyen et que l'un au moins (420) des logements (42) est ouvert sur les deux côtés de la paroi du conduit pour la mise en place du barreau (5) depuis l'extérieur du conduit par coulissement dans ledit logement (420) jusqu'à l'engagement de son extrémité dans l'autre logement (421), le conduit étant muni d'un moyen de blocage (44) du barreau, après mise en place, par fermeture des logements (42) sur le côté externe de la paroi.

2. Dispositif de protection selon la revendication 1, caractérisé par le fait que, le conduit étant constitué d'une chemise métallique (40) et d'un revêtement interne réfractaire (41), les logements (42) sont limités par des parois (43) solidaires de la chemise (40) et prolongeant celle-ci dans l'épaisseur du revêtement (41).

3. Dispositif de protection selon la revendication 1, caractérisé par le fait que l'un des logements (421) est fermé par la chemise (40) vers l'extérieur du conduit et que, l'autre logement (420) étant ouvert pour le passage du barreau (5), le moyen de blocage du barreau (5) est constitué d'une barrette métallique (44) fixée sur la chemise (40) en travers de l'ouverture dudit logement (420).

4. Dispositif de protection selon la revendication 1, caractérisé par le fait que, le conduit étant constitué d'une buse (4) enfilée dans une tubulure (3) solidaire de l'enceinte, les logements (42) sont ménagés dans la paroi de la buse (4) et, le barreau (5) étant mis en place sur celle-ci à l'extérieur de l'enceinte (1), le moyen de blocage du barreau (5) est constitué par la paroi de la tubulure (3) entourant la buse (4) après la mise en place de celle-ci.

**Claims**

1. Protection device for a conduit issuing into an enclosure (1) made up by a small bar (5) located so as to pass through the opening in the conduit with its ends engaging in two housings (42) formed on the two opposing faces of the wall of the conduit, characterised by the fact that the housing (42) and the small bar (5) are curved in the shape of an arc of circle having its convexity directed towards the enclosure having the same centre and the same mean radius of curvature and that at least one (420) of the housings (42) is open at the two sides of the conduit walls for insertion of the small bar (5) from outside the conduit by slipping it into said housing (420) until its end engages in the other housing (421), the conduit being provided with a locking means (44) for the small bar, when it has been located in place, using closing of the housings (42) at the outer side of the wall.

2. Protection device according to Claim 1, characterised by the fact that, as the conduit is constituted by a metal sleeve (40) and an internal refractory lining (41), the housings (42) are limited by walls (43) rigidly fixed to the sleeve (40) and extending the sleeve through the thickness of the lining (41).

3. Protection device according to Claim 1, characterised by the fact that one of the housings (41) is closed off by the sleeve (40) at the outer part of the conduit and that, the other housing (420) being open to provide for passage of the small bar (5), the locking means for the small bar (5) is made up by a metal strip (44) fixed to the sleeve (40) located across the opening of said housing (420).

4. Protection device according to Claim 1, characterised by the fact that, the conduit is made up by a nozzle (4) inserted into a tube (3) rigidly fixed to the enclosure, with the housings (42) formed in the wall of the nozzle (4) and, since the small bar (5) is located in place in the latter outside the enclosure (1), the locking means for the small bar (5) is made up by the wall of the tube (3) surrounding the nozzle (4) after it has been located in position.

**Patentansprüche**

1. Schutzvorrichtung für eine in einem Behälter (1) endende Leitung, bestehend aus einem quer zur Leitungsöffnung angeordneten Stab (5), dessen Enden in zwei Lagerungen (42) geführt sind, die auf zwei entgegengesetzten Seiten der Leitungswand angebracht sind, dadurch gekennzeichnet, dass die Lagerungen (42) und der Stab (5) kreisbogenförmig mit zum Behälter hin gerichteter Wölbung gewölbt sind und den gleichen Krümmungsmittelpunkt und mittleren Krümmungsradius aufweisen und dass mindestens eine (420) der Lagerungen (42) auf beiden Seiten der Leitungswand geöffnet ist, damit der Stab (5) von ausserhalb der Leitung durch Gleiten in der genannten Lagerung (420) bis Einführen des Stabendes in die andere Lagerung (421) eingesetzt werden kann, wobei die Leitung mit einer Stabblockiervorrichtung (44) ausgestattet ist, die nach Einsetzen des Stabs die Lagerungen an der Wandaussenseite verschliesst.

2. Schutzvorrichtung nach Anspruch 1 dadurch gekennzeichnet, dass, da die Leitung aus einem Metallmantel (40) und einer feuerfesten Innenverkleidung (41) besteht, die Lagerungen (42) durch mit dem Mantel (40) formschlüssig verbundene Wände (43) begrenzt werden, die den Mantel bis in die Verkleidungsdicke (41) verlängern.

3. Schutzvorrichtung nach Anspruch 1 dadurch gekennzeichnet, dass eine der Lagerungen (421) durch den Mantel (40) zur Leitungsaussenseite hin verschlossen ist und dass, da die andere Lagerung zum Durchführen des Stabs (5) geöffnet ist, die Blockiervorrichtung des Stabs (5) aus einem auf dem Mantel (40) quer durch die Offnung der genannten Lagerung (420) befestigten Metallbügel (44) besteht.

4. Schutzvorrichtung nach Anspruch 1 dadurch gekennzeichnet, dass, da die Leitung aus einem in einem mit dem behälter formschlüssig verbundenen Stutzen (3) eingeführten Austrittsrohrstück (4) besteht, die Lagerungen (42) in der Wand des Austrittsrohrstücks (4) angebracht sind, und da der Stab (5) ausserhalb des Behälters (1) auf dieser Wand angebracht wird, die Blockiervorrichtung des Stabs (5) aus der Wand des Stutzens (3) besteht, der das Austrittsrohrstück (4) nach Einsetzen umgibt.

FIG 1

FIG 2

FIG 3